# EUROPEAN PATENT APPLICATION

(11) **EP 3 438 835 A1**
(43) Date of publication of application: **06.02.2019**
(21) Application number: 17774704.5
(22) Date of filing: 23.03.2017
(51) Int. Cl.: G06F 13/00

(54) **QUEUE MANAGEMENT SYSTEM, QUEUE MANAGEMENT DEVICE, AND PROGRAM**

(30) Priority: 29.03.2016 JP 2016066138
(71) Applicant: Recruit Co., Ltd., Chuo-ku Tokyo 1040061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2017/011823
(87) International publication number: WO 2017/170166

(57) **Abstract**

A queue management system (1000) for managing waitings at a plurality of establishments, the queue management system (1000) being provided with terminal devices (200, 300) which receive registrations of waiting parties for each one of the plurality of establishments, a queue management terminal (200) which is installed in each one of the plurality of establishments and receives an update of the waiting status at each one of the plurality of establishments, and a queue management server (100) which receives information relating to the registrations of the waiting parties from the terminal devices, wherein the queue management server (100) is provided with: a storage unit (110) which stores a waiting list for retaining information about the waiting status of the waiting parties at each one of the plurality of establishments; a registered person identification information acquisition unit (120) which, upon receiving information relating to a registration of a waiting party for a first establishment from the terminal devices (200, 300), acquires registered person identification information of the waiting party from the terminal devices (200, 300) and registers the acquired registered person identification information in the waiting list; a duplicate registration determination unit (120) which determines whether registered person identification information identical to the acquired registered person identification information is registered in the waiting list for another establishment; and a duplicate registration notification unit (120) which, if the identical registered person identification information is registered in the waiting list for another establishment, notifies the queue management terminal (200) in the other establishment and in the first establishment of duplicate registration information.

## Description

### Cross-Reference to Related Applications

The present application is based on Japanese Patent Application No. 2016-66138 filed on March. 29, 2016, contents of which are incorporated herein by reference.

### Technical Field

The present invention relates to a queue management system, a queue management device, and a program.

### Background Art

In the related art, in restaurants, banks, government offices, or the like, various queue management systems are adopted in order to organize waitings of customers who are waiting for the service. For example, a popular restaurant or the like, performs a queue management of customers by preparing a designated reservation form of the restaurant to write a name of the reserved person and the number of people. (for example, refer to Patent Document 1 (specifically, paragraph numbers 0003 to 0007)).

### Citation List

### Patent Document

Patent Document 1: Japanese Patent Application Laid-Open No. 2004-94380

### Summary

### Technical Problem

In a case where there is a plurality of shops in the vicinity such as compound commercial establishments or restaurant districts, a same user may register a waiting for the plurality of shops in the same time zone. As for a user who is registered in the plurality of shops, when a notice that a waiting time has ended is sent from one of the shops and the user has been guided, the user is less likely to visit the other shops. However, in the queue management system in the related art, it is not capable of detecting registrations of the waitings by same users in a plurality of shops, therefore, it is not possible to deal with such a situation.

The present invention has been made in view of the foregoing problem and an object of the present invention is to provide a technique to detect registrations of waitings by a same user in a plurality of establishments, and detect a registered person who is less likely to actually use the establishment.

### Solution to Problem

According to an aspect of the present embodiment, there is provided a queue management system that manages waitings at a plurality of establishments, the system including: a terminal device which receives a registration of a waiting party for each one of the plurality of establishments; a queue management terminal which is installed in each one of the plurality of establishments and receives a update of the waiting status at each one of the plurality of establishments; and a queue management server which receives information relating to the registration of the waiting party from the terminal device, in which the queue management server includes: a storage unit which stores a waiting list for retaining information relating to the waiting status of the waiting party at each one of the plurality of establishments, a registered person identification information acquisition unit which, upon receiving information relating to a registration of a waiting party for a first establishment from the terminal device, acquires registered person identification information of the waiting party from the terminal device and registers the acquired registered person identification information in the waiting list, a duplicate registration determination unit which determines whether registered person identification information identical to the acquired registered person identification information is registered in the waiting list for another establishment, and a duplicate registration notification unit which, if identical registered person identification information is registered in the waiting list for another establishment, notifies the queue management terminal in the other establishment and in the first establishment of the duplication registration information.

The queue management server may include an update information notification unit which, upon receiving update information relating to a waiting status of a certain waiting party from the queue management terminal, when there is a duplicate registration at another establishment for the waiting party, notifies the queue management terminal of the other establishment of the update information relating to the duplicate registration.

The registered person identification information may be a cookie value stored in the terminal device.

The queue management terminal may include a display unit that displays the information relating to the waiting status of each waiting party at each one of the plurality of establishments, and when the queue management terminal receives the duplicate registration information from the queue management server, the display unit may display the information relating to the waiting status of the corresponding waiting party in a manner indicating the duplicate registration exists.

### Advantageous Effects of Invention

According to the present invention, it is possible to detect registrations of waitings by a same user in a plurality of establishments, and detect a registered person who is less likely to actually use the establishment.

### Brief Description of Drawings

Fig. 1 is a diagram illustrating a schematic configuration of a queue management system 1000 according to an embodiment of the present invention.
Fig. 2 is a block diagram illustrating a main configuration of a queue management terminal 200.
Fig. 3 is a flowchart illustrating a flow of a registration reception process of a waiting at the queue management system 1000.
Fig. 4 is a diagram illustrating an example of a reception screen for a website displayed on a user terminal 300.
Fig. 5 is a diagram illustrating an example of a status management screen displayed on the queue management terminal 200.
Fig. 6 is a flowchart illustrating a flow of information sharing relating to a status of the waiting among establishments.
Fig. 7 is a diagram illustrating an example of the status management screen displayed on the queue management terminal 200, when there is a duplicate registration.

### Description of Embodiments

Hereinafter, an embodiment of the present invention will be described in detail with reference to the drawings. The same components are denoted by the same reference numerals, and duplicate descriptions will not be repeated.

Although, the present embodiment describes an example when managing waitings of users who use services provided by restaurants A and B, the present invention is also applied to any establishments, such as amusement parks, shopping malls, department stores, or movie theaters, that perform a management of the waitings of the users using the establishments. Note that, the establishments here include not only restaurants, shops, or the like, but also booths or corners at event venues and exhibitions, stalls or the like.

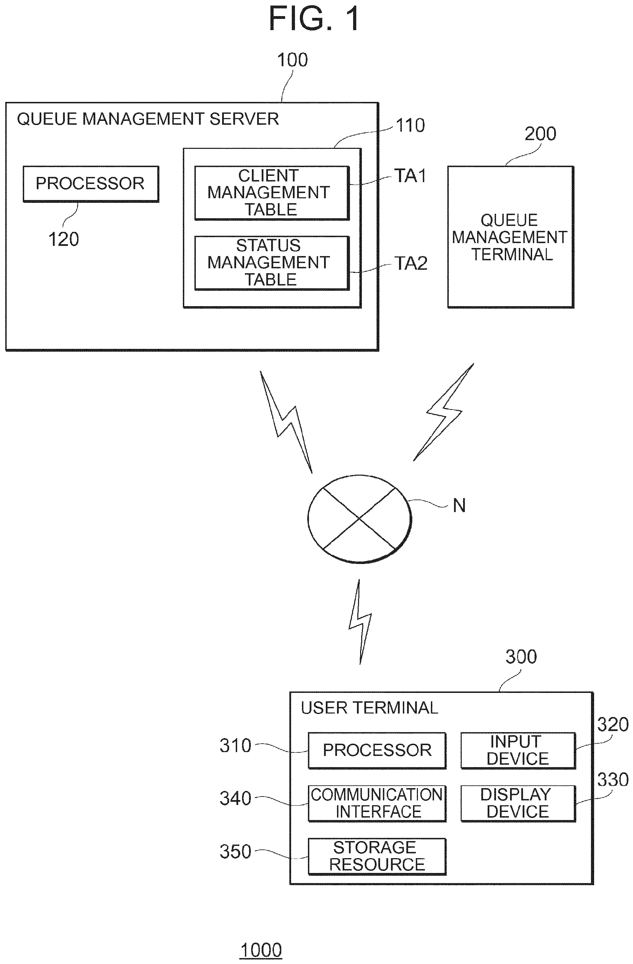

Fig. 1 is a diagram illustrating a schematic configuration of a queue management system 1000 according to the embodiment of the present invention. As shown in Fig. 1, the queue management system 1000 includes a queue management server 100, a queue management terminal (terminal device) 200, and a user terminal (terminal device) 300. The queue management server 100 is connected to the queue management terminal 200 and the user terminal 300 via a communication network N.

The queue management server 100 manages waitings for each establishment registered via the queue management terminal 200 or the user terminal 300, for each establishment. The queue management server 100 is configured by a general purpose computer and realizes a server function by operating a predetermined server program in the computer. A computer configuring the queue management server 100 is not necessarily one, the computer may be composed of a plurality of computers distributed over the communication network N.

The queue management server 100 includes a management database (storage unit) 110 for managing the queue management terminal 200 for each establishment and a processor (a registered person identification information acquisition unit, a duplicate registration determination unit, a duplicate registration notification unit, an update information notification unit) 120. The management database 110 includes a client management table TA1 and a status management table TA2.

In the client management table TA1, unique IDs and passcords (accounts) are registered in association with each establishment. Here, "ID: A1..." and "passcord: AA2..." are set for a queue management terminal 200 used in the "restaurant A", and "ID: B1..." and "passcord: BB2..." are set for a queue management terminal 200 used in the "restaurant B". The ID and the passcord for each establishment are set by, for example, an administrator (for example, the owner of a shop, or the like) who performs a management of the waiting at each establishment at the time of installing the system. Note that, in the embodiment, it is assumed that one queue management terminal 200 is used at one establishment, but a plurality of queue management terminals 200 may be used at one establishment. In a case where the plurality of queue management terminals 200 is used at one establishment, same IDs and passcords may be used, but a plurality of IDs and passcords may be selectively used according to a predetermined condition, for example.

A waiting list at each establishment is registered in the status management table TA 2. The waiting list includes a list of person who is waiting (waiting party) and information which indicates a status of waiting of each waiting party (status information). For example, for the restaurant A, a first record of the waiting list includes information such as, reception number "1", registered person identification information (cookie value) "123", reception time "13:03", number of people designated at the time of reception "3 people", and status "in waiting". In a case where the waiting having the same registered person identification information is registered in duplicate in the waiting list of a plurality of establishments, information indicating the duplicate registration for another establishment is recorded in the records. In addition, information (name of establishment or ID) of the other establishment having the duplicate registration and current status information at each establishment may also be recorded in the records.

The status includes "in wait" which is a state before a turn, "on call" which is a state where the turn is informed, "guided" which is a state where the turn has come and a guide is actually completed, "canceled" which is a state where the waiting is canceled, or the like. The administrator, or the like of each establishment is able to appropriately set or change item settings relating to the status. The administrator, or the like of each establishment are also able to appropriately set or change information included in the waiting list. Contents of the waiting list are updated based on a new registration information to the waiting list sent from the queue management terminal 200 or the user terminal 300, or based on update information of status (details will be described later).

The registered person identification information may be, for example, a cookie value created when a user makes a registration of a waiting via a website. Alternatively, an ID such as an mail address of the user, a telephone number, a membership number or the like may be used. In addition, an identification number of the user terminal 300 such as an international mobile equipment identifier (IMEI), or a user ID of a social networking service (SNS) retained in the user terminal 300 may be used.

The processor 120 is composed of an arithmetic logic unit (CPU or the like) for processing arithmetic operations, logical operations, bit operations and the like, and various registers. Also, the processor 120 centrally controls each part of the queue management server 100 by executing various programs stored in storage means such as ROM. Further, the processor 120 executes a computer program (queue management application) for managing the waiting in cooperation with the queue management terminal 200.

The communication network N includes a communication network capable of mutually transmitting and receiving information between the queue management server 100, and the queue management terminal 200 and the user terminal 300. The communication network N may be any of an Internet, a LAN, a dedicated line, a telephone line, an intra-network for the company, a mobile communication network, a Bluetooth (registered trademark), a wireless fidelity (WiFi), other communication lines, a combination thereof, or the like. And the communication network N may be wired or wireless.

The queue management terminal 200 is installed in the vicinity of an entrance of each establishment (restaurant A and restaurant B) that provides a service, receives a registration of a waiting for a user who visited the establishment, and also receives a confirmation or an update operation a status of the waiting from an employee of the establishment. Note that, an example of Fig. 1 illustrates only one queue management terminal 200, however, the queue management terminals 200 installed in the plurality of establishments are managed by the queue management server 100.

The queue management terminal 200 is able to use any terminal devices, which are a tablet terminal, a personal computer (PC), a notebook PC, a smartphone, a mobile phone, a personal digital assistant (PDA), or the like, capable of exchanging data with the queue management server 100 via the communication network N.

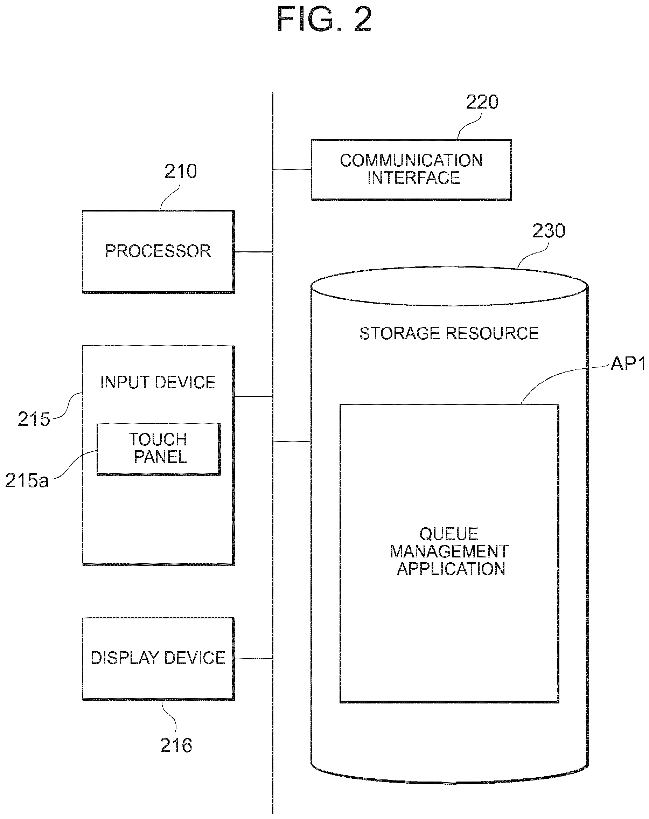

Fig. 2 is a block diagram illustrating a main configuration of the queue management terminal 200. The queue management terminal 200 includes a processor 210, an input device 215, a display device (display unit) 216, a communication interface 220, and a storage resource 230. When a user directly operates the input device 215 such as a touch panel, the queue management terminal 200 receives an input which is a reception or a deletion on the waiting list. Here, visitors, employees, or the like are assumed as a user. For example, the visitor performs the input for registering a new waiting on the waiting list, and the employee performs the input for updating the status of the information registered in the waiting list. In this case, administrators or employees of the establishments are collectively referred to as an employee or the like.

The processor 210 is composed of an arithmetic logic unit (CPU or the like) for processing arithmetic operations, logical operations, bit operations and the like, and various registers. Also, the processor 210 centrally controls each part of the queue management terminal 200 by executing various programs stored in the storage resource 230. The various registers are, for example, a program counter, a data register, an instruction register, a general register or the like.

The input device 215 includes various operation buttons or the touch panel 215a for receiving inputs such as the reception to the waiting list and the deletion from the waiting list.

The display device 216 is a device for displaying a reception screen or a standby screen including the waiting list, a reception button, or the like, and the device is composed of, for example, a liquid crystal display.

The communication interface 220 is a hardware module that connects to the communication network N and communicates with other terminals on the communication network N. The communication interface 220 is, for example, a modulation-demodulation device such as an ISDN modem, an ADSL modem, a cable modem, an optical modem, a soft modem, or the like.

The storage resource 230 is, for example, a logical device provided by a storage area of a physical device. The physical device is, for example, a computer-readable recording medium such as a disk drive or a semiconductor memory (ROM, RAM, or the like). The storage resource 230 may be configured by mapping a plurality of physical devices to one logical device or may be configured by mapping one physical device to a plurality of logical devices.

The storage resource 230 stores an operating system program, a driver program, various data, or the like. As the driver program, for example, there is a communication interface driver program for controlling the communication interface 220 or the like. Further, the storage resource 230 stores a computer program (queue management application) AP1 for managing the waiting in cooperation with the queue management server 100 by executing the processor 210 in addition to the various programs or various data.

The user terminal 300 is a terminal owned by a user of the service, such as a smartphone, a mobile phone, a tablet terminal, a wearable device, or the like. The user terminal 300 includes the storage resource 350 such as a processor 310, an input device 320 such as various operation buttons or a touch panel, a display device 330 such as a liquid crystal display, a communication interface 340 for connecting to the communication network N, a disk drive, or a semiconductor memory (ROM, RAM, or the like). Further, the storage resource 350 stores a computer program (queue management application) for managing the waiting in cooperation with the queue management server 100 by executing the processor in addition to the various programs or various data. The user is capable of registering the waiting to each establishment via a web browser installed in the user terminal 300 or other application. Note that, since the hardware configuration of each element of the user terminal 300 is the same as the corresponding element of the queue management terminal 200, duplicate descriptions will not be repeated.

Next, an operation of the queue management system 1000 in the present embodiment will be described. It is assumed that a user of the queue management system 1000 is a user or an employee of the establishment. The user connects to a reservation website using the user terminal 300 owned by the user, and is able to perform the registration of the waiting in remote without going to the establishment. Also, the user actually is able to go to the establishment and operates the queue management terminal 200 installed in the establishment to register the waiting.

### (Register to waiting list)

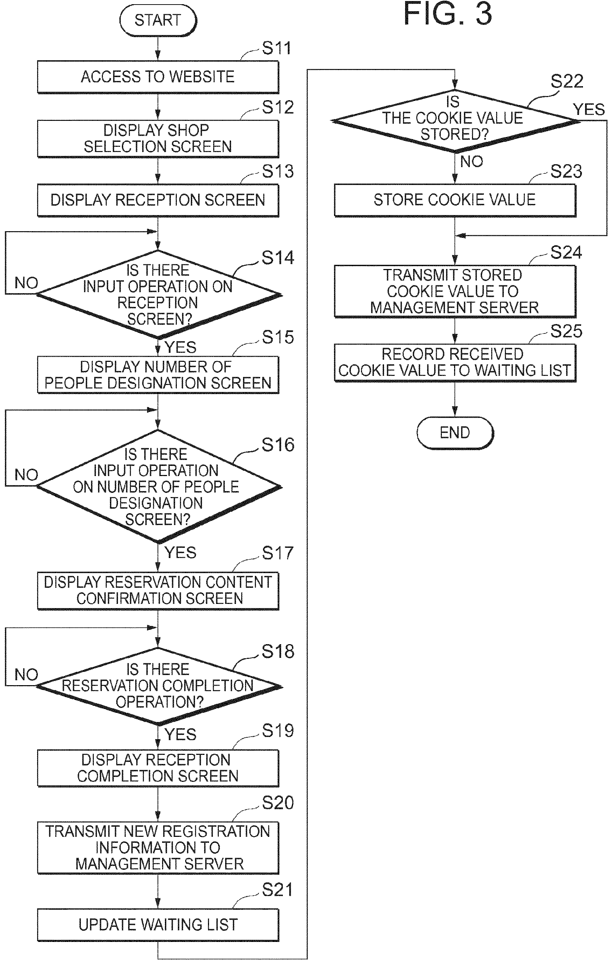

Fig. 3 is a flowchart illustrating a flow of a reception process of a registration of waiting at the queue management system 1000. Here, an example is illustrated in which a user X performs a registration of a waiting for a certain establishment (for example restaurant A) by using the user terminal 300 owned by the user X.

First, the user X operates the user terminal 300 to access a website of the queue management system 1000 (step S11). When the user accesses the website, a selection screen of the shop, where the registration of the waiting is performed, is displayed on the display device 330 via the web browser (step S12). On the selection screen of the shop, a message prompting a designated operation of the shop where the registration of the waiting is performed, a condition designated button for searching the shop, a designated button of the shop, or the like are displayed.

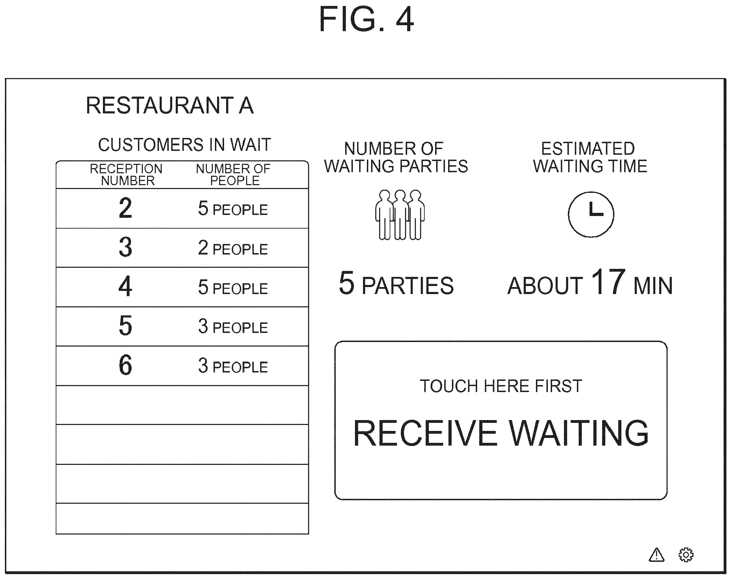

When the user X operates the user terminal 300 to perform the designated operation of the shop where waiting registration is performed, a reception screen for the website is displayed on the display device 330 of the user terminal 300 (step S13). Fig. 4 is a diagram illustrating an example of the reception screen for the website displayed on the display device 330 of the user terminal 300 via the web browser. As shown in Fig. 4, on the reception screen for the website, at least a part of the waiting list registered in a status management table TA2 of the queue management server 100 (for example, the reception number of the person who is in the waiting and the number of people) is displayed and also the message prompting the reception operation to the waiting list, the reception button, or the like are displayed. In addition, a number of waiting parties and an estimation waiting time at the moment may be displayed. Note that, the administrator of each establishment is able to decide the items displayed on the reception screen according to the intention of the administrator.

The user terminal 300 detects whether or not an input operation is performed on the displayed reception screen via the input device 320 such as the touch panel by the user X (step S14), and when the input is received (step S14: YES), the display device 330 displays a number of people designation screen for designating the number of people in the waiting (step S15). On the number of people designation screen, a message prompting the input operation of the number of people, a number of people designation button, or the like are displayed.

The user terminal 300 detects whether or not the input operation is performed on the displayed number of people designation screen via the input device 320 by the user X (step S16), and when the input of the number of people is received (step S16: YES), the display device 330 displays a reservation content confirmation screen (step S17). On the reservation content confirmation screen, a message prompting a confirmation of the number of reserved people and reservation contents, a message prompting a reservation confirmation operation, a reservation confirmation button, or the like are displayed. Also, a registration operation of a contact information (a mail address or a telephone number) may be performed for making a call when a turn arrives.

The user terminal 300 detects whether or not a reservation completion operation is performed (step S18), and when the reservation completion operation is received (step S18: YES), the user terminal 300 displays a reception completion screen (step S19). On the reception completion screen, a reception number (waiting number), a waiting time at the moment, or the like are displayed. A message for confirming whether or not to perform the registration of waiting for another shop or a designated button to perform the registration of waiting for the other shop may also be displayed.

The user terminal 300 transmits a confirmed new registration information to the queue management server 100 via the communication network N (step S20). Upon receiving the new registration information, the queue management server 100 performs a process that adds one party of records to the waiting list of the corresponding establishment based on the received new registration information, and updates the status management table TA2 (step S21).

Next, the user terminal 300 detects whether a cookie value (registered person identification information) is stored on the terminal (step S22), and when the cookie value is not stored (step S22: NO), the user terminal 300 stores a new cookie value (registered person identification information) via the website (step S23). When the cookie value is stored (step S22: YES), and after the new cookie value is stored in step S23, the cookie value is transmitted to the queue management server 100 via the communication network N (step S24).

Upon receiving the cookie value from the user terminal 300, the queue management server 100 records the cookie value in the corresponding record of the waiting list (step S25). A cookie value stored in the user terminal 300 is, thereafter, read out when the user X performs the registration of waiting for another shop by using the user terminal 300, and the cookie value is transmitted to the queue management server 100 as information for identifying a registered person.

Note that, in the above example, the cookie value stored in the user terminal 300 is used as information for identifying whether or not the registered person is the same, but other information may be used as the registered person identification information. For example, at the time of the registration reception, the user X may input a mail address, a telephone number, a member ID to be issued on the website or the like, and the information may be retained in the waiting list as registered person identification information. In addition, a unique identification number of the user terminal 300 such as an IMEI, a user ID of an SNS retained in the user terminal 300, or the like may be transmitted to the queue management server 100.

In the above example, the user X uses the user terminal 300 to perform the registration of the waiting via the website, however, it is performed in the same procedure in a case of registering by using the queue management terminal 200 installed in each shop. Note that, when registration is performed using the queue management terminal 200, if the registered person identification information such as the cookie value is already stored in the user terminal 300 of the user who intends to register, the registered person identification information such as the cookie value may be transmitted from the user terminal 300 to the queue management terminal 200 using short-range wireless communication (for example, Bluetooth (registered trademark)).

### (Update waiting list)

The contents of each record of the waiting list at each establishment are updated when an employee, or the like of the establishment performs operation such as "cancel", "change", "call", "guide" or the like using the queue management terminal 200. "cancel" means canceling the waiting, and "change" means changing contents of the waiting once inputted. In addition, "call" means a state where a person, whose turn has come, is called verbally or is informed by a telephone, an email, or the like, "guide" means a state where a person, whose turn has come, is actually guided and a corresponding response has completed.

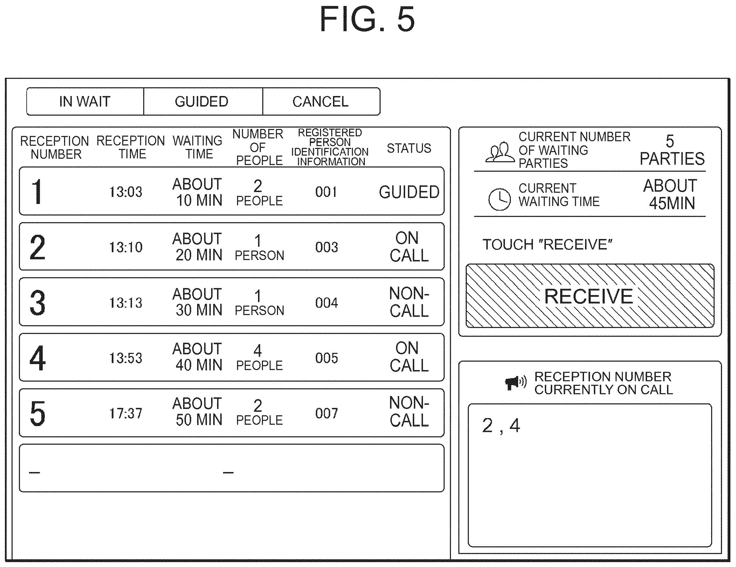

Fig. 5 is a diagram illustrating an example of a status management screen on which an employee or the like of the establishment performs an update operation of the waiting list. As shown in Fig. 5, on the status management screen, the status information of the waiting party registered in the waiting list is displayed in the order of reception. Specifically, "reception number", "registered person identification information", "number of people", "status" or the like of the waiting party are displayed.

When the employee or the like specifies an update target of the waiting status from the waiting list displayed on the status management screen and swipes the line of the waiting party (for example, reception number "1"), the operation button for performing any one of "call", "guide", "cancel", and "change" are displayed for the designated waiting party.

The employee or the like performs the status update operation by tapping a desired operation button (for example, "guide"). When such an operation is performed, the status update information representing the status update indication is uploaded from the queue management terminal 200 to the queue management server 100 via the communication network N. The status update information includes information for specifying a record to be updated (for example, reception number "1") and the update operation content (for example, "guide").

The queue management server 100 updates the waiting list of the establishment based on the received status update information. For example, when the "guide" operation is performed on the reception number "1", the status of the waiting party of the reception number "1" is updated to "guided".

### (Share information of waiting)

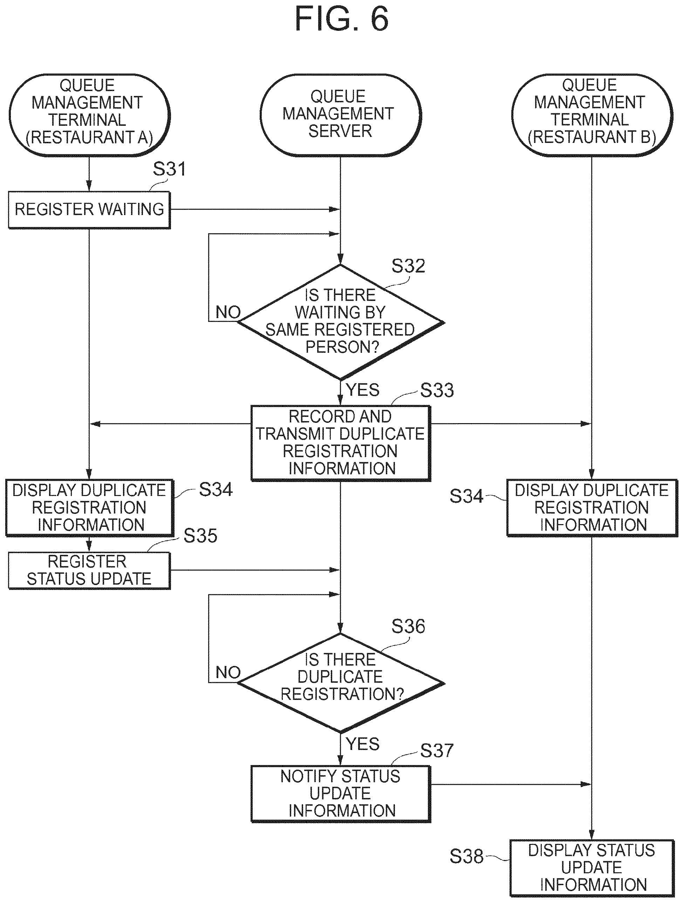

In the present embodiment, information relating to the waiting status of the user is shared among the plurality of establishments registered the waiting by the same user. Fig. 6 is a flowchart illustrating a flow of the information sharing relating to the status of the waiting among the establishments.

When a new waiting is registered in the waiting list at a certain establishment (restaurant A, in this case) (step S31), the queue management server 100 extracts the registered person identification information of the registered record, and determines whether or not the waiting having the same registered person identification information is registered in the waiting list of another establishment in duplicate (step S32). Note that, the duplication here means that a difference between the times when the waiting was registered for each establishment, falls within a predetermined range. For example, if the difference in registration time for the other establishment is within a certain period of time (for example, two hours), it may be determined as the duplicate registration or all waitings registered on a same day is determined to be the duplicate registration. In addition, a time range to be determined as the duplicate registration may be determined according to a distance (traveling time) between the two establishments. For example, in a case where the difference in registration time is shorter than the estimation of the traveling time between two establishments, it may be determined to be the duplicate registration.

When the waiting having the same registered person identification information is registered in the waiting list of the other establishment (restaurant B, in this case) (step S32: YES), the queue management server 100 notifies the queue management terminal 200 of the establishment of the reception number of the record detected to have the same registered person identification information and the ID of the other establishment (restaurant A, in this case) registered in duplicate waiting as duplicate registration information (step S33). An ID of the other establishment (restaurant B) is also notified to the certain establishment (restaurant A) registered a new waiting as a duplicate registration information. Note that, in the same way, when the waiting is registered at three or more establishments by a same registered person, the reception number and the ID of the other establishment are notified to each of the establishment. Further, the queue management server 100 records an existence of the duplicate registration with the other establishment in the corresponding record of the waiting list of each establishment (restaurant A and restaurant B, in this case). The information of the other establishment having a duplicate registration and current status information at each establishment may also be recorded.

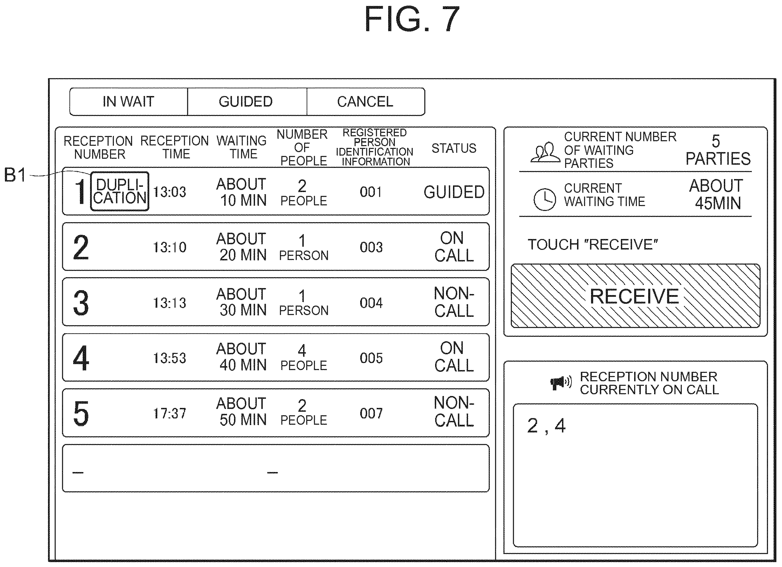

On the queue management terminal 200 of each establishment notified of the duplicate registration information, a mark indicating the existence of the duplicate registration by the same registered person at the other establishment, is displayed on the line of the corresponding waiting party in the waiting list displayed on the status management screen (step S 34). Specifically, for example, as shown in Fig. 7, when the "duplicate" button B1 is displayed in the corresponding line and the "duplicate" button is operated, a name of the other establishment registered in duplicate, may be displayed. Also, the current status ("in wait", "guided", "canceled", or the like) at each establishment having the duplicate registration may be displayed.

When a status of the waiting party registered in the waiting list at a certain establishment is updated (step S35), the queue management server 100 determines whether or not the record where the status is updated, is the waiting where the duplicate registration is included in the other establishment (step S36). When the waiting has the duplicate registration (step S36: YES), the status update information of the duplicate registration (update information of duplicate registration) is notified to the queue management terminal 200 of the other establishment having the duplicate registration (step S37). Specifically, the corresponding reception number of the waiting, the ID of the establishment in which the status is updated, and the status after the update are notified.

For example, if the registration of the waiting by the same user X exists in the restaurant A and restaurant B, and the status of the user X in the restaurant A becomes "guided", the queue management server 100 notifies the queue management terminal 200 of the restaurant B of the reception number of the user X in the restaurant B, the ID of the restaurant A and the updated status "guided".

On the queue management terminal 200 of each establishment received the status update information of the duplicate registration, a mark indicating the status update of the duplicate registration at the other establishment, is displayed on the line of the corresponding waiting party in the waiting list displayed on the status management screen (step S38). For example, a message "updated" may be displayed next to the "duplicate" button in the corresponding line, or the "duplicate" button may be blinked to notify that there is updated information. When operating the "duplicate" button, the name of the other establishment having the duplicate registration and the current status ("in wait", "guided", "canceled", or the like) at each establishment having the duplicate registration may be displayed. In a case where the status is updated, the status information of the corresponding establishment may be blinked, or the display method may be changed by changing the color or the like, to notify the user or the like.

For example, when an employee of the restaurant B confirms that the user X registered the waiting in duplicate is guided at the restaurant A, the employee is able to cancel the waiting of the user X, since it is determined that the user X is unlikely to visit the restaurant B.

As described above, according to the present embodiment, the queue management server 100, when receiving the registration of the waiting for a certain establishment, acquires the registered person identification information for identifying the waiting party and determines whether or not a same registered person is registered for the waiting in another establishment by using the registered person identification information. Accordingly, it is possible to detect the duplicate registration of the waiting in the plurality of establishments by the same registered person. Also, in a case where there is the duplicate registration, notification is performed to the queue management terminal 200 of the corresponding establishment. Therefore, in each establishment having the duplicate registration, it is possible to recognize the waiting party that is less likely to actually use the establishments.

The queue management server, upon receiving the status update information of a certain waiting party from the queue management terminal 200, and when there is the duplicate registration at a plurality of establishments for the waiting party, the status update information of the duplicate registration is notified to the queue management terminal 200 of the relating establishment. As a result, in the establishment that received the notification, it is possible to recognize the waiting party that is less likely to visit the shop by using the status update in the other establishments. Also, if necessary, it is possible to respond to such as canceling the registration of the waiting party or postponing a turn.

By using the cookie value stored in the user terminal 300, for example, as the registered person identification information, the queue management server 100 is capable of acquiring the registered person identification information with a simple process without inputting the information by the user who performs the registration.

Further, upon receiving the duplicate registration information from the queue management server 100, the queue management terminal 200 performs a display indicating the existence of the duplicate registration on the corresponding line in the waiting list displayed on the status management screen. Therefore, in each establishment, it is possible to efficiently recognize the waiting party that is less likely to visit the stop.

Note that, the present invention is not limited to the embodiment described above, and it is possible to make various modifications without departing from the spirit of the invention. Therefore, the embodiment described above is merely an example in all respects, and is not to be interpreted limitedly. For example, each processing step described above may be changed in order or performed in parallel as long as there is no inconsistency in the processing contents.

### Reference Signs List

1000: queue management system
100: queue management server
110: management database
120: processor
200: queue management terminal
210: processor
215: input device
215a: touch panel
216: display device
220: communication interface
230: storage resource
300: user terminal
310: processor
320: input device
330: display device
340: communication interface
350: storage resource
TA1: client management table
TA2: status management table
N: communication network
AP1: queue management application

## Claims

1. A queue management system that manages waitings at a plurality of establishments, the system comprising:
a terminal device which receives a registration of a waiting party for each one of the plurality of establishments;
a queue management terminal which is installed in each one of the plurality of establishments and receives an update of the waiting status at each one of the plurality of establishments; and
a queue management server which receives information relating to the registration of the waiting party from the terminal device,
wherein the queue management server includes:
a storage unit which stores a waiting list for retaining information relating to the waiting status of the waiting party at each one of the plurality of establishments,
a registered person identification information acquisition unit which, upon receiving information relating to a registration of a waiting party for a first establishment from the terminal device, acquires registered person identification information of the waiting party from the terminal device and registers the acquired registered person identification information in the waiting list,
a duplicate registration determination unit which determines whether registered person identification information identical to the acquired registered person identification information is registered in the waiting list for another establishment, and
a duplicate registration notification unit which, in a case where identical registered person identification information is registered in the waiting list for another establishment, notifies the queue management terminal in the other establishment and in the first establishment of duplicate registration information.

2. The queue management system according to claim 1,
wherein the queue management server includes an update information notification unit which, upon receiving update information relating to a waiting status of a certain waiting party from the queue management terminal, when there is a duplicate registration at another establishment for the waiting party, notifies the queue management terminal of the other establishment of update information relating to the duplicate registration.

3. The queue management system according to claim 1 or 2,
wherein the registered person identification information is a cookie value stored in the terminal device.

4. The queue management system according to any one of claims 1 to 3,
wherein the queue management terminal includes a display unit that displays the information relating to the waiting status of each waiting party at each one of the plurality of establishments, and
when the queue management terminal receives the duplicate registration information from the queue management server, the display unit displays the information relating to the waiting status of the corresponding waiting party in a manner indicating that the duplicate registration exists.

5. A queue management device that manages waitings at a plurality of establishments, the device comprising:
a storage unit which stores a waiting list for retaining information relating to the waiting status of a waiting party at each one of the plurality of establishments;
a registered person identification information acquisition unit which, upon receiving information relating to a registration of a waiting party for a first establishment from the terminal device, acquires registered person identification information about the waiting party from the terminal device and registers the acquired registered person identification information in the waiting list;
a duplicate registration determination unit which determines whether registered person identification information identical to the acquired registered person identification information is registered in the waiting list for another establishment; and
a duplicate registration notification unit which, in a case where identical registered person identification information is registered in the waiting list for another establishment, notifies the queue management terminal installed in the other establishment and in the first establishment of duplicate registration information.

6. A program that causes a computer that manages waitings at establishments, the computer functioning as:
a storage unit which stores a waiting list for retaining information relating to the waiting status of a waiting party at each one of the establishments;
a registered person identification information acquisition unit which, upon receiving information relating to a registration of a waiting party for a first establishment from the terminal device, acquires registered person identification information of the waiting party from the terminal device and registers the acquired registered person identification information in the waiting list;
a duplicate registration determination unit which determines whether registered person identification information identical to the acquired registered person identification information is registered in the waiting list for another establishment; and
a duplicate registration notification unit which, in a case where identical registered person identification information is registered in the waiting list for another establishment, notifies the queue management terminal installed in the other establishment and in a first establishment of duplicate registration information.
